# EUROPÄISCHE PATENTSCHRIFT

(11) **EP 0 868 987 B1**
(45) Veröffentlichungstag und Bekanntmachung des Hinweises auf die Patenterteilung: **02.01.2002**
(21) Anmeldenummer: 98102147.0
(22) Anmeldetag: 07.02.1998
(51) Int. Cl.: B29C 45/50

(54) **Vorrichtung zum Plastifizieren und Einspritzen von Thermoplasten in ein Spritzgiesswerkzeug**
Device for plasticizing and injecting thermoplastics in an injection mould
Dispositif de plastification et d'injection des matières thermoplastiques dans un moule à injection

(30) Priorität: 05.04.1997 DE 19714149
(43) Veröffentlichungstag der Anmeldung: 07.10.1998
(73) Patentinhaber: Battenfeld GmbH, D-58540 Meinerzhagen (DE)
(72) Erfinder: Gosdin, Michael, Dr., 58540 Meinerzhagen (DE)
(74) Vertreter: Gosdin, Michael, Dr.

(56) Entgegenhaltungen:
- DE-A- 2 028 408
- DE-A- 2 127 165
- DE-A- 2 426 703
- GB-A- 949 129
- PATENT ABSTRACTS OF JAPAN vol. 8, no. 57 (M-283), 15.März 1984 & JP 58 209539 A (SEKISUI KAGAKU KOGYO KK), 6.Dezember 1983,
- PATENT ABSTRACTS OF JAPAN vol. 9, no. 172 (M-397), 17.Juli 1985 & JP 60 044317 A (NIPPON SEIKOSHO KK), 9.März 1985,

## Beschreibung

Die Erfindung betrifft eine Vorrichtung zum Plastifizieren und Einspritzen von Thermoplasten in ein Spritzgießwerkzeug, bestehend aus
- einem Schneckenzylinder, in dem sich eine Plastifizier- und Einspritzschnecke befindet,
- Mitteln zum rotatorischen Bewegen der Schnecke im Schneckenzylinder zwecks Plastifizierung von Thermoplast und
- Mitteln zum translatorischen Bewegen der Schnecke im Schnekkenzylinder zwecks Einspritzen des plastifizierten Thermoplasts in das Spritzgießwerkzeug,
- einem ersten Schneckenteil zum Plastifizieren von Thermoplast mit einem Durchmesser, der im wesentlichen dem Innendurchmesser eines ersten Teils des Schneckenzylinders entspricht, auf dem Schneckengänge angeordnet sind, und
- einem zweiten Schneckenteil zum Einspritzen des Thermoplasts in ein Spritzgießwerkzeug, das mit dem ersten Schneckenteil fest verbunden ist, mit einem Durchmesser, der kleiner als der Durchmesser des ersten Schneckenteils ist und der im wesentlichen dem Innendurchmesser eines zweiten Teils des Schneckenzylinders entspricht,
wobei der Schneckenzylinder neben der Düsenöffnung eine weitere Öffnung aufweist, durch die während des Einspritzens durch die Düsenöffnung plastifizierter Thermoplast aus dem Schneckenzylinder ausfließen kann.

Plastifizier- und Einspritzvorrichtungen für Spritzgießmaschinen sind hinlänglich bekannt. Meist befindet sich eine Schnecke in einem Schneckenzylinder, die zunächst rotatorisch angetrieben wird. Dadurch - und ggf. durch äußere Wärmeeinwirkung auf den Schneckenzylinder - wird thermoplastisches Kunststoffgranulat plastifiziert und in einen Schneckenvorraum gefördert. Dort sammelt sich die Schmelze, bis genügend Material angesammelt ist. Durch eine translatorische Verschiebebewegung der Schnecke wird dann das im Schneckenvorraum vorhandene Kunststoffmaterial in ein Spritzgießwerkzeug eingespritzt; die Schnecke und der Schneckenzylinder wirken dann also als Kolben und Zylinder. Nähere Angaben zum Stand der Technik finden sich in der Zeitschrift British Plastics, Heft 9, 1959, Seiten 417 bis 421.

In **JP-A-58 209 539** wird der vordere Teil eines Extruders mit einem angrenzenden Kolben zum Plastifizieren und Einspritzen von Thermoplasten gezeigt. Weiterhin ist ein mit einem Hydraulikzylinder verschlossene Ausströmöffnung vorgesehen, in der beim Einspritzen Kunststoffschmelze aus dem Extruder entweichen kann.

In jüngerer Zeit ist der Bedarf aufgetreten, Spritzgießformteile mit besonders kleinen Ausmaßen herzustellen. Hier sind mikro-mechanische Bauteile (z. B. Mikrozahnräder für Kleinstpumpen), medizintechnische Kleinteile und optoelektronische Elemente (z. B. Teile für Lichtleiter) als Beispielbauteile zu nennen, bei denen die Herstellung mit klassisschen Spritzgießmaschinen Probleme bereitet. Dies ist dadurch bedingt, daß bei üblichen Schnecken- und Schneckenzylinderabmessungen - auch wenn diesbezüglich kleine Elemente verwendet werden - eine nur minimale Einspritzbewegung der Schnecke notwendig ist, um beispielsweise einige wenige Milligramm Schmelze ins Werkzeug zu injizieren, was bei üblichen Steuer- und Regelelementen bereits eine beträchtliche Schwankung von Spritzgießzyklus zu Spritzgießzyklus zur Folge hat.

Der vorliegenden Erfindung liegt daher die **Aufgabe** zugrunde, eine Vorrichtung der gattungsgemäßen Art zu schaffen, mit der es möglich ist, ohne hohen regelungstechnischen Aufwand kleine und kleinste Schmelzemengen wiederholgenau ins Werkzeug zu injizieren. Dabei soll ein besonderer Augenmerk auf einer einfachen konstruktiven Ausführung der Vorrichtung liegen.

Die **Lösung** der Aufgabe durch die Erfindung ist dadurch gekennzeichnet, daß
die weitere Öffnung (9) mit einem Schmelzeaufnahmebehälter (10) in Verbindung steht und
der Schmelzeaufnahmebehälter (10) aus einer Kolben-Zylinder-Einheit (11) besteht,
wobei der Kolben (12) der Kolben-Zylinder-Einheit (11) mit einer Kraft (F) beaufschlagt ist und
die Kraft (F) durch ein Federelement erzeugt wird.

Die Schnecke besteht also aus im wesentlichen zwei Teilen: Der plastifizierende Bereich ist weitgehend konventionell ausgebildet, d. h. der Schneckengrundkörper trägt Schneckengänge, die bei Rotation der Schnecke in üblicher Weise für die Herstellung von Schmelze sorgen. Diese Schmelze sammelt sich im Schneckenvorraum.

In diesem Bereich ist die Schnecke mit einem zweiten Schneckenteil, nämlich mit einem Kolben, ausgestattet, der - im Verhältnis zum mit Schneckengängen ausgerüsteten Schneckenteil - einen deutlich kleineren Durchmesser aufweist. Dieser Kolben paßt zu einem entsprechenden Abschnitt des Schneckenzylinders bzw. zur Einspritzdüse. Damit ist gewährleistet, daß jetzt bei translatorischer Bewegung der Schnecke zwecks Einspritzen weniger Schmelze ins Werkzeug eingespritzt wird, was im Zusammenwirken mit der vorhandenen Steuerung bzw. Regelung der Schneckenverschiebebewegung zu einer höheren Genauigkeit und zur Möglichkeit führt, kleine Schmelzemengen genau zu injizieren.

Da die im Schneckenvorraum angesammelte Schmelze kaum kompressibel ist, ist dafür Sorge getragen, daß 'überflüssige' Schmelze aus dem Schnekkenvorraum über eine weitere Öffnung im Schneckenzylinder in eine Nebenkammer austreten kann. Daher ist weiterbildungsgemäß vorgesehen, daß die weitere Öffnung (9) mit einem Schmelzeaufnahmebehälter (10) in Verbindung steht. Dieser kann aus einer Kolben-Zylinder-Einheit (11) bestehen. Der Kolben (12) der Kolben-Zylinder-Einheit (11) kann mit einer Kraft (F) beaufschlagt sein, wobei diese Kraft vorzugsweise durch ein Federelement erzeugt wird.

Alternativ kann die weitere Öffnung (9) mit der Umgebung (U) in Verbindung stehen. Dann wird 'überflüssige' Schmelze also einfach aus dem Schneckenvorraum abgelassen. Vorteilhafterweise ist hierbei vorgesehen, daß zwischen der weiteren Öffnung (9) und der Umgebung (U) ein Rückschlagventil (13) angeordnet ist.

Um ein 'Einfrieren' im Bereich der weiteren Öffnung (9) zu verhindern, ist vorgesehen, daß in diesem Bereich Temperierelemente (14) angeordnet sind.

Vorteilhafterweise wird durch diese Lösungskonzeption erreicht, daß mit einfachen konstruktiven Mitteln eine Plastifizier- und Einspritzeinheit bereitgestellt wird, die sich - in Abhängigkeit des Durchmessers (d) des Kolbens am Ende der Schnecke - dafür eignet, kleine und kleinste Schmelzemengen mit einem hohen Grad an Reproduzierbarkeit zu injizieren.

In der Zeichnung sind zwei Ausführungsbeispiele der Erfindung dargestellt.
- Fig. 1: zeigt den schematischen Querschnitt durch eine Plastifizier- und Einspritzschnecke während des Plastifiziervorganges,
- Fig. 2: zeigt denselben Querschnitt während des Schmelzeein-spritzens,
- Fig. 3: zeigt eine andere Ausführung mit Abführung der Schmelze ins Freie.

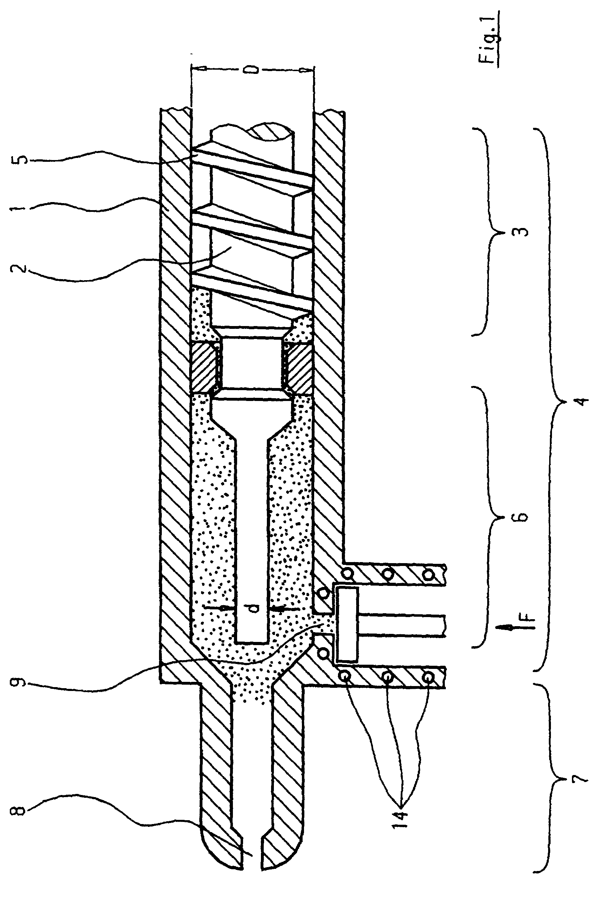

In Fig. 1 ist ein Schneckenzylinder 1 dargestellt, in dem sich eine Plastifizier- und Einspritzschnecke 2 befindet. Die Schnecke 2 wird dabei während des Plastifizierens von Schmelze rotatorisch durch einen nicht dargestellten Antrieb angetrieben. In einem ersten Bereich der Schnecke 3 sind zur Plastifizierung Schneckengänge 5 angeordnet, die in üblicher Weise Kunststoffgranulat kneten und damit plastifizieren. Die Plastifizierung wird ggf. durch nicht dargestellte Heizelemente im Schneckenzylinder unterstützt. Der Schneckenteil 3 hat - unter Mitrechnung der Schneckengänge - einen Durchmesser D. Der Schneckenzylinder 1 hat im wesentlichen denselben Durchmesser über einen ersten Teil 4.

Ein zweiter Schneckenteil 6, der mit dem ersten Teil 3 fest verbunden ist, besteht im wesentlichen aus einem Kolben mit einem Druchmesser d, der kleiner als der Durchmesser D ist, unter Umständen wesentlich kleiner (Faktor 5 oder mehr). Zwischen erstem Schneckenteil 3 und zweitem Teil 6 ist eine übliche Rückstromsperre angeordnet. Der zweite Schneckenteil 6 paßt - vom Durchmesser her gesehen - in einen zweiten Teil 7 des Schnekkenzylinders 1; im Zusammenwirken mit diesem bildet sich ein Kolben-Zylinder-System, mit dem Schmelze in das - nicht dargestellte - Spritzgießwerkzeug durch die Düsenöffnung 8 eingespritzt werden kann.

Durch die erhebliche Durchmesserdifferenz zwischen erstem (3) und zweitem (6) Schneckenteil wird - pro translatorischer Verschiebelänge der Schnecke 2 - nunmehr nur sehr wenig Schmelze ins Werkzeug gefördert, jedoch (wegen des Durchmesserverhältnisses) mit druckverstärkender Wirkung.

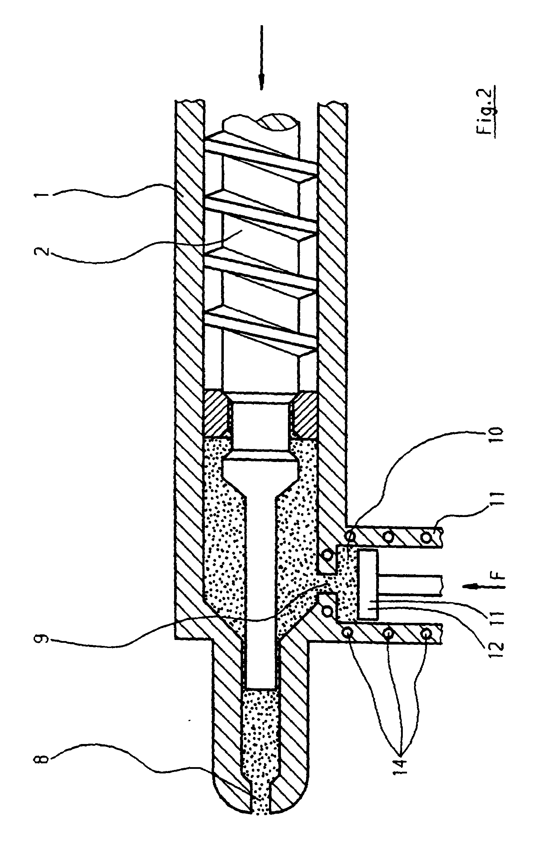

Der Schneckenzylinder 1 weist eine weitere Öffnung 9 auf, die mit einer Kolben-Zylinder-Einheit 11 verbunden ist, die als Schmelzeaufnahmebehälter 10 fungiert. Während des Einspritzens von Schmelze ins Werkzeug - s. Fig. 2 -, d. h. während des Verschiebens der Schnecke 2 in Pfeilrichtung, wird Schmelze aus dem Schneckenvorraum infolge geringer Kompressibilität über die Öffnung 9 in die Kolben-Zylinder-Einheit verdrängt.

Der Kolben kann dabei mit einer Kraft F von einem aktiven oder passiven Element (z. B. aktiv angesteuerter hydraulischer oder pneumatischer Antrieb oder Feder) beaufschlagt werden. Damit ist es insbesondere auch möglich, beim Zurückziehen der Schnecke nach dem Einspritzen (gegen die Pfeilrichtung) Schmelze wieder in den Schneckenvorraum zurückzudrängen und dort für den nächsten Schuß vorzuhalten. Hierbei kann in Betracht kommen, mittels eines - nicht dargestellten - aktiven Stellelements die Kraft F zu erzeugen. Aus diesem Grunde sind auch Temperierelemente 14 im Bereich der Kolben-Zylinder-Einheit vorgesehen, damit die Öffnung 9 und die Schmelze in der Einheit 11 nicht 'einfriert'.

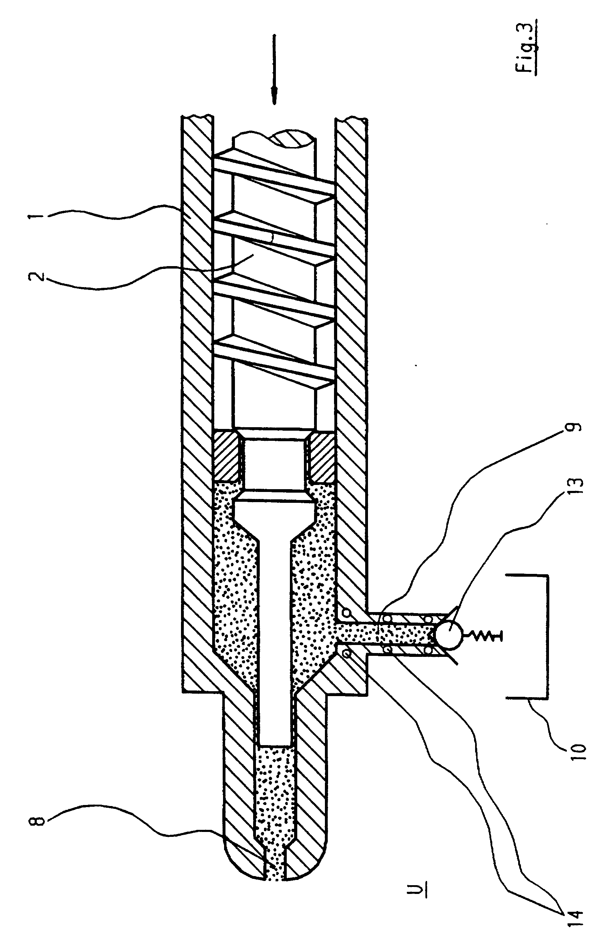

Eine noch preiswertere Ausgestaltung der Plastifizier- und Einspritzvorrichtung ist in Fig. 3 zu sehen. Die Öffnung 9, über die beim Einspritzen Schmelze aus dem Schneckenzylinder 1 ausgebracht wird, steht hier direkt mit der Umgebung U in Verbindung. Während des Einspritzens tropft daher die Schmelze aus der Öffnung 9 aus und fällt in einen Schmelzeaufnahmebehälter 10. Um ein gewünschtes Druckniveau im Schneckenvorraum zu halten, ist ein - beispielsweise federvorgespanntes - Rückschlagventil 13 vorgesehen.

Die vorgeschlagene Vorrichtung stellt einen konstruktiv einfach aufgebauten Druckverstärker dar, der die genaue Dosierung von einzuspritzenden Schmelzemengen erlaubt. Trotzdem kann konventionelles Kunststoffgranulat verwendet werden, da der Plastifizierteil der Schnecke konventionell aufgebaut ist. Dies hat vorteilhafte Auswirkungen beim Spritzgießen von Kleinst-Kunststoffteilen (Mikrospritzgießen), wo pro Schuß nur wenige Milligramm Schmelze erforderlich sind. Trotz herkömmlicher Regelung kann eine hohe Wiederholgenauigkeit der einzuspritzenden Kunststoffmasse erreicht werden.

### Bezugszeichenliste:

- 1: Schneckenzylinder
- 2: Plastifizier- und Einspritzschnecke
- 3: erstes Schneckenteil
- 4: erster Teil des Schneckenzylinders
- 5: Schneckengänge
- 6: zweites Schneckenteil
- 7: zweiter Teil des Schneckenzylinders
- 8: Düsenöffnung
- 9: Öffnung
- 10: Schmelzeaufnahmebehälter
- 11: Kolben-Zylinder-Einheit
- 12: Kolben
- 13: Rückschlagventil, federvorgespannt
- 14: Temperierelemente

- F: Kolbenvorspannkraft
- U: Umgebung

## Patentansprüche

1. Vorrichtung zum Plastifizieren und Einspritzen von Thermoplasten in ein Spritzgießwerkzeug, bestehend aus
- einem Schneckenzylinder (1), in dem sich eine Plastifizier- und Einspritzschnecke (2) befindet,
- Mitteln zum rotatorischen Bewegen der Schnecke (2) im Schnekkenzylinder (1) zwecks Plastifizierung von Thermoplast und
- Mitteln zum translatorischen Bewegen der Schnecke (2) im Schneckenzylinder (1) zwecks Einspritzen des plastifizierten Thermoplasts in das Spritzgießwerkzeug,
- einem ersten Schneckenteil (3) zum Plastifizieren von Thermoplast mit einem Durchmesser (D), der im wesentlichen dem Innendurchmesser eines ersten Teils (4) des Schneckenzylinders (1) entspricht, auf dem Schneckengänge (5) angeordnet sind, und
- einem zweiten Schneckenteil (6) zum Einspritzen des Thermoplasts in ein Spritzgießwerkzeug, das mit dem ersten Schneckenteil (3) fest verbunden ist, mit einem Durchmesser (d), der kleiner als der Durchmesser (D) des ersten Schneckenteils (3) ist und der im wesentlichen dem Innendurchmesser eines zweiten Teils (7) des Schneckenzylinders (1) entspricht,
wobei der Schneckenzylinder (1) neben der Düsenöffnung (8) eine weitere Öffnung (9) aufweist, durch die während des Einspritzens durch die Düsenöffnung (8) plastifizierter Thermoplast aus dem Schneckenzylinder (1) ausfließen kann,
**dadurch gekennzeichnet, daß**
die weitere Öffnung (9) mit einem Schmelzeaufnahmebehälter (10) in Verbindung steht und
der Schmelzeaufnahmebehälter (10) aus einer Kolben-Zylinder-Einheit (11) besteht,
wobei der Kolben (12) der Kolben-Zylinder-Einheit (11) mit einer Kraft (F) beaufschlagt ist und
die Kraft (F) durch ein Federelement erzeugt wird.

2. Vorrichtung nach Anspruch 1, **dadurch gekennzeichnet, daß** die weitere Öffnung (9) mit der Umgebung (U) in Verbindung steht.

3. Vorrichtung nach Anspruch 2, **dadurch gekennzeichnet, daß** zwischen der weiteren Öffnung (9) und der Umgebung (U) ein Rückschlagventil (13) angeordnet ist.

4. Vorrichtung nach einem der Ansprüche 1 bis 3, **dadurch gekennzeichnet, daß** im Bereich der weiteren Öffnung (9) Temperierelemente (14) angeordnet sind.

## Claims

1. Device for plastifying and injecting thermoplastics into an injection-moulding die, comprising
- a screw cylinder (1), in which a plastifying and injecting screw (2) is situated,
- means for rotatory movement of the screw (2) in the screw cylinder (1) for the purpose of plastifying thermoplastic, and
- means for translatory movement of the screw (2) in the screw cylinder (1) for the purpose of injecting the plastified thermoplastic into the injection-moulding die,
- a first screw part (3) for plastifying thermoplastic having a diameter (D), which corresponds essentially to the internal diameter of a first part (4) of the screw cylinder (1), on which spirals (5) are arranged, and
- a second screw part (6) for injecting the thermoplastic into an injection-moulding die, which is firmly connected to the first screw part (3), having a diameter (d) which is smaller than the diameter (D) of the first screw part (3), and which corresponds essentially to the internal diameter of a second part (7) of the screw cylinder (1),
wherein the screw cylinder (1), in addition to the nozzle opening (8), has a further opening (9), through which plastified thermoplastic can flow out of the screw cylinder during injection through the nozzle opening (8), **characterised in that** the further opening (9) is connected to a melt-receiving container (10) and the melt-receiving container (10) consists of a piston-cylinder unit (11),
wherein the piston (12) of the piston-cylinder unit (11) is exposed to a force (F) and
the force (F) is produced by a spring element.

2. Device according to claim 1, **characterised in that** the further opening (9) is connected to the surroundings (U).

3. Device according to claim 2, **characterised in that** a non-return valve (13) is arranged between the further opening (9) and the surroundings (U).

4. Device according to one of claims 1 to 3, **characterised in that** tempering elements (14) are arranged in the region of the further opening (9).

## Revendications

1. Dispositif de plastification et d'injection de thermoplastiques dans un moule à injection, constitué
- d'un cylindre à vis (1) dans lequel se trouve une vis de plastification et d'injection (2),
- de moyens de production de rotation de la vis (2) dans le cylindre à vis (1) pour la plastification de thermoplastique et
- de moyens de production de translation de la vis (2) dans le cylindre à vis (1) pour l'injection dans le moule à injection du thermoplastique plastifié,
- d'une première partie de vis (3) pour la plastification de thermoplastique, qui a un diamètre (D) correspondant sensiblement au diamètre intérieur d'une première partie (4) du cylindre à vis (1), et sur laquelle sont faits des filets (5), et
- d'une deuxième partie de vis (6) pour l'injection du thermoplastique dans un moule à injection, qui est solidaire de la première partie de vis (3) et a un diamètre (d) qui est inférieur au diamètre (D) de la première partie de vis (3) et correspond sensiblement au diamètre intérieur d'une deuxième partie (7) du cylindre à vis (1),
le cylindre à vis (1) présentant près de l'orifice (8) de la buse un autre orifice (9) par lequel, pendant l'injection par l'orifice (8) de la buse, du thermoplastique plastifié peut sortir du cylindre à vis (1),
**caractérisé par le fait que**
l'autre orifice (9) est en communication avec un récipient de réception de matière fondue (10) et
le récipient de réception de matière fondue (10) est constitué d'un vérin (11),
au piston (12) du vérin (11) étant appliquée une force (F) et
la force (F) étant produite par un élément élastique.

2. Dispositif selon la revendication 1, **caractérisé par le fait que** l'autre orifice (9) est en communication avec le milieu extérieur (U).

3. Dispositif selon la revendication 2, **caractérisé par le fait qu'**entre l'autre orifice (9) et le milieu extérieur (U) est placé un clapet de non-retour (13).

4. Dispositif selon l'une des revendications 1 à 3, **caractérisé par le fait que** dans la zone de l'autre orifice (9) sont placés des éléments de réglage de température (14).
